# EUROPÄISCHE PATENTSCHRIFT

(11) **EP 1 607 000 B1**
(45) Veröffentlichungstag und Bekanntmachung des Hinweises auf die Patenterteilung: **11.04.2007**
(21) Anmeldenummer: 04013920.6
(22) Anmeldetag: 14.06.2004
(51) Int. Cl.: A22C 11/10

(54) **Verfahren und Vorrichtung zur Wurstherstellung**
Method and device for producing sausage
Procédé et dispositif de fabrication de saucisse

(43) Veröffentlichungstag der Anmeldung: 21.12.2005
(73) Patentinhaber: Albert Handtmann Maschinenfabrik GmbH & Co. KG, 88400 Biberach (DE)
(72) Erfinder: Schliesser, Gerhard, 88489 Wain (DE); Flach, Jürgen, 89584 Ehingen (DE)
(74) Vertreter: Grünecker, Kinkeldey, Stockmair & Schwanhäusser Anwaltssozietät

(56) Entgegenhaltungen:
- EP-A- 0 900 528
- EP-A- 1 310 171
- US-A- 5 147 239
- US-B1- 6 439 990

## Beschreibung

Die Erfindung betrifft ein Verfahren und eine Vorrichtung zur Herstellung von Würsten.

Bei der automatischen Wurstherstellung werden üblicherweise Füllmaschinen wie z.B. Vakuumfüller eingesetzt. Solche Füllmaschinen bringen Wurstbrät durch ein Füllrohr in eine Wursthülle ein. Die Wursthülle befindet sich dazu im gerafften Zustand direkt auf dem Füllrohr oder in einer entsprechenden Hülse, die über das Füllrohr geschoben wird. Im Allgemeinen befindet sich am Ende des Füllrohres eine sogen. Darmbremse bzw. ein Bremsring. Nach dem Ausstoß einer Wurstportion aus dem Füllrohr, die einer einzelnen Wurst entspricht, wird die Wurst beispielsweise mit Hilfe eines Clippers unterteilt. Um Würste mit konstanter Länge sicherstellen zu können, wird dem Füllrohr eine angetriebene Längeneinheit nachgeschaltet. Diese Längeneinheit zieht die Wursthülle durch den Bremsring hindurch vom Füllrohr ab. EP-A-0 900 528 betrifft ein derartiges Verfahren und eine derartige Vorrichtung.

Auf dem Markt sind die folgenden zwei gängigen Verfahren zur Herstellung geclippter Portionsware bekannt.

Zum Einen werden zur Herstellung von geclippten Portionen eine Füll- oder Portioniereinheit (z.B. ein Vakuumfüller) mit einer Clipmaschine gekoppelt. Die Vakuumfüllmaschine portioniert die Masse in eine Wursthülle. Danach wird ein Startsignal an die Clipmaschine geleitet. Die Clipmaschine teilt den Strang, in dem die Verdrängerelemente der Clipmaschine radial in den Strang einfahren und die Masse verdrängen. Durch axiales Verfahren der Darmbremse wird die dadurch verdrängte Masse in Richtung der Tülle verschoben. Der Raum zwischen Verdränger und Darmbremse wird damit vergrößert und kann die verdrängte Masse aufnehmen. Die Verdränger bilden einen sogen. Zopf (ein Stück nicht gefüllter Darm), der mit dem Clip verschlossen wird. Anschließend wird der Verdränger wieder geöffnet und die nächste Portion durch die Vakuumfüllmaschineausgestoßen. Dies bewirkt, dass mittels abgezogener Wursthülle die Darmbremse in Ausgangsstellung gezogen wird und damit auch die gepufferte Masse der Portion zugegeben wird. Diese Vorrichtung und dieses Verfahren bringen jedoch den Nachteil mit sich, dass die Darmbremse beweglich angeordnet sein muss, was die Vorrichtung kompliziert und teuer macht. Außerdem ist ein derartiges Verfahren in der Taktzahl begrenzt und Brät wird darüber hinaus in Richtung Darmbremse verschoben, was sich nachteilig auf die Produktqualität und auf die Gewichtsgenauigkeit auswirkt.

Bei dem zweiten gängigen Verfahren wird abweichend zum ersten Verfahren bei Clipmaschinen mit Spreizverdrängem der notwendige Freiraum zum Setzen der Clips bei feststehender Bremse geschaffen. Zwei dicht nebeneinander liegende Verdrängerpaare werden gleichzeitig geschlossen. Dann wird ein Verdrängerpaar in Richtung des Brätausstoßes vom anderen Verdrängerpaar weggefahren, um den Freiraum zum Setzen der Clips zu schaffen. Dadurch wird ein nicht befülltes Stück der gerafften Darmraupe von der Tülle abgezogen. Dieses Verfahren und diese Vorrichtung bringen den Nachteil von axial beweglichen Verdrängerpaaren mit sich, was die Vorrichtung kompliziert und teuer macht. Auch dieses Verfahren ist in der Taktzahl begrenzt und es wirkt eine erhebliche mechanische Belastung auf die Wursthülle und den Verdränger.

Hiervon ausgehend liegt der vorliegenden Erfindung die Aufgabe zugrunde, ein Verfahren sowie eine Vorrichtung zum Herstellen von Würsten bereitzustellen, die keine axial beweglichen Darmbremsen bzw. Verdrängerpaare erfordern, kostengünstig und einfach realisiert werden können, konstante Wurstkaliber ermöglichen und darüber hinaus einen optimalen Produktionsablauf gewährleisten.

Erfindungsgemäß wird diese Aufgabe durch die Merkmale der Patentansprüche 1 und 7 gelöst.

Gemäß der vorliegenden Erfindung kann nach Portionsende die Portion durch die Transportmittel, z.B. Transportbänder, noch um eine bestimmte Zeit Δt bzw. eine entsprechende Wegstrecke weitertransportiert werden, um dadurch zusätzlich geraffte Hülle, z.B. Wursthülle, vom Füllrohr abzuziehen. Die zusätzlich abgezogene Wursthülle stellt demnach ein zusätzliches Volumen für das Füllgut, z. B. Wurstbrät dar, um das Volumen zu kompensieren, das beim Verdrängen durch das Clipmodul verloren gegangen ist. Dadurch wird die Wursthülle durch das Nachziehen der Darmhülle etwas lockerer befüllt. Während des Verdrängens wird die Masse in dem Bereich der Wursthülle, der durch Nachziehen lockerer befüllt ist, so verteilt, dass die nun fertige Portion wieder prall befüllt ist. Bei dieser Ausführungsform wird die Fülleinheit bevorzugt intermittierend betrieben. Es ergibt sich somit ein exaktes Kaliber und eine hohe Leistung aufgrund keiner zusätzlichen axial beweglichen Teile wie Darmbremse oder Verdränger. Auch die Gewichtsgenauigkeit kann insbesondere bei der ersten und letzten Portion verbessert werden. Darüber hinaus weisen die Portionen gleiche Längen auf. Das Füllgut wird schonender behandelt, da ein größtmöglicher Füllrohrdurchmesser verwendbar ist, da keine Masse gepuffert werden muss, was wiederum eine geringere Fließgeschwindigkeit mit sich bringt. Darüber hinaus kann die Darmbremse besser funktionieren, da es durch den großen Durchmesser des Füllrohrs und der Darmbremse zu einer geringeren Faltenbildung in Längsrichtung der abgezogenen Wursthülle kommt. Es ergibt sich ein optimierter Produktionsablauf, da alle Funktionen zentral von der Steuerung gesteuert werden. Alternativ dazu kann die Ansteuerung der Transportmittel auch derart erfolgen, dass kurz vor Portionsende, d.h. vor Ablauf der Zeitdauer t2, die Transportmittel kurz beschleunigt werden, damit zusätzliche Hülle vom Füllrohr abgezogen wird und sich die zuvor ausgeführten Vorteile ergeben. Das Portionsende ist dann erreicht, wenn das Füllrohr eine Portion Füllgut ausgestoßen hat, die der Portion einer Einzelportion, beispielsweise einer Wurst, entspricht. Das Portionsende ist zum Zeitpunkt t2 erreicht. Wenn die Transportmittel, d.h. z.B. die Transportbänder, vor Portionsende kurz beschleunigt werden, kann die Fülleinheit intermittierend oder aber auch kontinuierlich z. B. mit abgesenktem Füllgutausstoß zwischen zwei Portionen betrieben werden.

Es ist vorteilhaft, wenn die zusätzlich abgezogene Wursthülle ein Volumen bereitstellt, das dem 0,5- bis 2fachen, insbesondere dem Halben vom Clipmodul verdrängten Volumen entspricht. Vorzugsweise laufen die Transportbänder synchron zu Ausstoßgeschwindigkeit des Wurstbräts. Zwischen zwei aufeinanderfolgenden Clipschritten fördern die Transportmittel die gefüllte Hülle um eine Wegstrecke, die größer ist als die Länge der Einzelportion.

Gemäß einer bevorzugten Ausführungsform wird die durch Clips verschlossene befüllte Wursthülle in den Transportbändemdurch eine Trenneinheit zu Einzelportionen oder zu Ketten von zwei oder mehreren Portionen geschnitten. Das Abtrennen im Bereich der Transportbänder ist platzsparend.

Gemäß der vorliegenden Erfindung kann die Zeitdauer Δt, in der die Transportbänder nach Portionsende zusätzlich bewegt werden, frei gewählt werden, wobei vorzugsweise eine Eingabeeinrichtung zur Eingabe der Zeitdauer Δ t vorgesehen ist.

Vorzugsweise sind die Darmbremse und die Verdränger des Clipmoduls in Axialrichtung unbeweglich, was die Vorrichtung vereinfacht.

Nachfolgend wird die vorliegende Erfindung unter Bezugnahme der begleitenden Zeichnungen näher erläutert.
- Figur 1: zeigt schematisch eine Vorrichtung zur Wurstherstellung gemäß der vorliegenden Erfindung.
- Figuren 2a, 2b, 2c: zeigen die jeweiligen Signalzeitpläne für das Fülleinheit-Steuersignal, Transportbänder-Steuersignal und Clipper-Steuersignal gemäß einem ersten Ausführungsbeispiel der vorliegenden Erfindung.
- Figuren 3a und 3b: sind schematische Teildarstellungen der Vorrichtung zur Wurstherstellung gemäß der vorliegenden Erfindung in verschiedenen Zeitabschnitten.
- Figuren 4a, 4b, 4c: zeigen die jeweiligen Signalzeitpläne für das Fülleinheit-Steuersignal, Transportbänder-Steuersignal, Clipper-Steuersignal gemäß einem weiteren Ausführungsbeispiel der vorliegenden Erfindung.

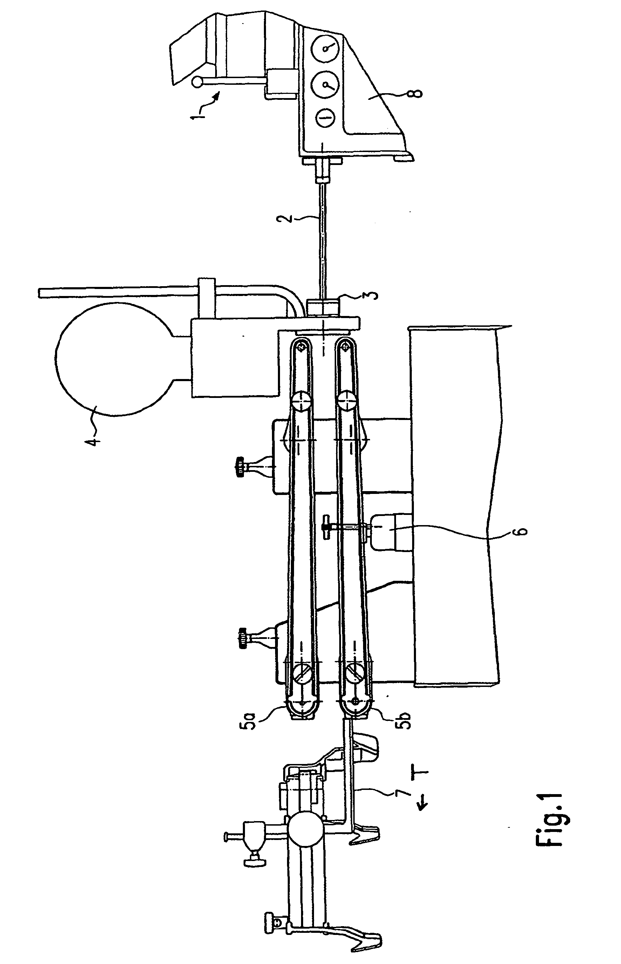

Figur 1 zeigt schematisch eine Ausführungsform der erfindungsgemäßen Vorrichtung. Eine Fülleinheit 1, hier ein Vakuumfüller, umfasst einen Einfülltrichter für das Wurstbrät und ein Füllrohr 2. Aus dem Füllrohr 2 wird das Wurstbrät portionsweise oder kontinuierlich ausgestoßen. Dazu kann innerhalb der Fülleinheit 1 eine nicht gezeigte Flügelzellenpumpe vorgesehen sein. Am Ende des Füllrohrs 2 befindet sich in herkömmlicher Weise eine Darmbremse 3, durch die die auf dem Füllrohr 2 geraffte Wursthülle abgezogen werden kann, während die Wursthülle durch das Füllrohr 2 gefüllt wird. In Transportrichtung T hinter der Darmbremse 3 befindet sich ein Clipmodul 4. Das Clipmodul weist einen Clipper auf, wie er im fleischverarbeitenden Gewerbe zum Herstellen von Verschlüssen bei Würsten eingesetzt wird. Ein derartiger Clipper umfasst beispielsweise zwei Verdrängerelemente, die radial in den Wurststrang eingreifen, die Masse verdrängen und einen Clip 9 setzen. Es können auch mehrere Clips, vorzugsweise zwei Clips 9, gesetzt werden. In Transportrichtung T hinter dem Clipmodul 4 befindet sich eine sogen. Längeneinheit, die die Wursthülle durch die Darmbremse vom Füllrohr abzieht und den gefüllten Wurststrang in Transportrichtung T kontrolliert abführt. Durch Einstellung der Abfördergeschwindigkeit durch die Längeneinheit während der Wurstbefüllung im Verhältnis zu der Füllausstoßgeschwindigkeit kann die Länge der einzelnen Würste festgelegt werden. Die Längeneinheit umfasst hier zwei angetriebene umlaufende endlose Transportbänder 5a, 5b, die über einen nicht dargestellten Antrieb angetrieben werden und deren gegenüberliegende Bänder sich in Transportrichtung bewegen. Der Abstand der Transportbänder 5a, 5b zueinander ist frei einstellbar und an das jeweilige Wurstkaliber anpassbar. In Transportrichtung T hinter den Transportbändern 5a, 5b befindet sich eine Aufhängeeinheit 7 mit mehreren Haken an denen die verschlossenen Würste aufgehängt werden können. Alternativ dazu können die fertigen Würste z.B. auch an einen Auslauf mit Förderband weitergegeben werden.

Im Bereich der Transportbänder 5a, 5b ist eine Trenneinheit 6 vorgesehen, die die durch die Clips 9 verschlossene Wursthüllen zu Einzelportionen oder zu Ketten von zwei oder mehreren Portionen schneiden kann.

Die Vorrichtung zur Wurstherstellung umfasst weiter eine Steuerung 8. Die Steuerung 8 ist über nicht gezeigte Leitungen mit der Fülleinheit 1, dem Antrieb für die Transportbänder 5a, 5b und dem Clipmodul 4 verbunden. Die Steuereinrichtung 8 kann auch über nicht gezeigte Leitungen mit der Trenneinheit 6 verbunden sein, sowie mit der Aufhängeeinheit 7 oder dem alternativ dazu angeordneten Förderband.

Der Betrieb der erfindungsgemäßen Vorrichtung zur Wurstherstellung wird nun im Folgenden beschrieben:

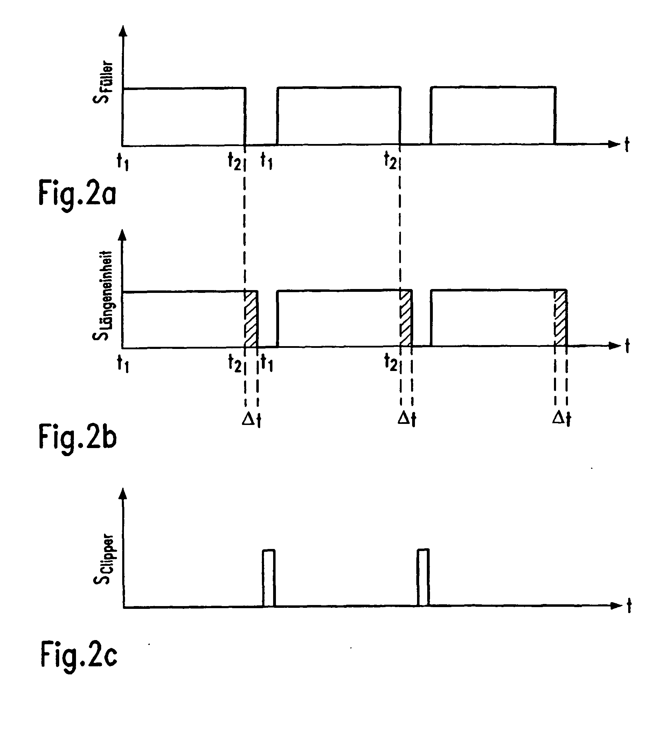

In bekannter Weise wird geraffte Wursthülle auf das Füllrohr aufgebracht und die Darmbremse in Arbeitsposition gebracht. Über einen Trichter wird das Füllgut, z.B. das Wurstbrät, in die Vorrichtung eingeführt. Mit Hilfe der in der Fülleinheit 1 befindlichen Flügelzellenpumpe wird das Wurstbrät portionsweise durch das Füllrohr 2 ausgepresst und befüllt die Wursthülle. Wie aus Figur 2a hervorgeht, wird dazu von der Steuerung 8 zu einer Zeit t₁ ein Steuersignal S_{Füller} an die Fülleinheit 1 geleitet bis nach einer vorbestimmten Zeit t2 das Portionsende erreicht ist. Somit wird eine Portion Brät über das Füllrohr 2 ausgestoßen und die Wursthülle portionsweise mit dem Brät befüllt. Gleichzeitig steuert, wie aus Figur 2b hervorgeht, die Steuerung 8 die Transportbänder 5a, b, bzw. deren Antrieb an und zwar über eine zweite Zeitdauer t2+ Δt, die um die Zeitdauer Δ t größer ist als die erste Zeitdauer t₂ zum Ansteuern der Fülleinheit 1. Dies bewirkt, dass die portionsweise befüllten Wursthüllen in Transportrichtung T durch die Transportbänder 5a, b abgeführt werden, wobei nach Portionsende, d.h. nach dem Zeitpunkt t2 zusätzlich Wursthülle vom Füllrohr 2 abgezogen wird. Nach dem Zeitraum t2+Δt stoppen die Transportbänder 5a, b und die Steuerung 8 gibt, wie aus Fig. 2c ersichtlich, ein Signal an das Clipmodul 4 aus, so dass die befüllte Wursthülle durch das Clipmodul 4 verschlossen wird. Wie aus Figuren 2a, b, c hervorgeht, wiederholt sich nachfolgend der zuvor beschriebene Vorgang zur Herstellung einer Wurstkette.

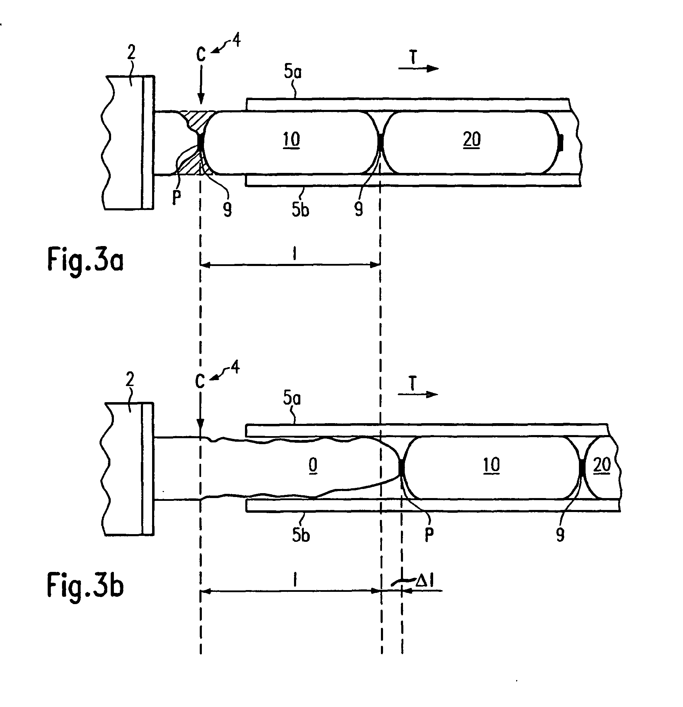

Besonders deutlich wird das zuvor genannte Verfahren im Zusammenhang mit Figuren 3a und 3b. Figur 3a zeigt das Füllrohr 2 sowie die Transportbänder 5a, 5b, wobei der Wurststrang bereits in zwei Teilportionen 10, 20 durch das Clipmodul 4 unterteilt worden ist. Die Länge einer fertigen Portion beträgt I. Am Punkt P (Fig. 3a) hat das Clipmodul 4 gerade einen weiteren Clip 9 oder Doppelclip gesetzt, wobei die Steuerung 8, wie auch in Figur 3 gezeigt ist, ein entsprechendes Signal S_{Clipper} an das Clipmodul 4 weitergeleitet hat. Nun gibt, wie zuvor beschrieben, die Steuerung 8 die entsprechenden Signale S_{Füller} und S_{Transportbänder} an die Fülleinheit 1 und Transportbänder weiter, damit erneut eine Portion Wurstbrät aus dem Füllrohr 2 ausgestoßen wird und die Transportbänder 5a, b in Transportrichtung T weiterbewegt werden. Das bedeutet, dass beispielsweise die bereits abgeteilte Portion 10 um eine Wegstrecke |+ Δ1 in Transportrichtung T weiterbewegt wird, wobei die Wegstrecke I, wie bereits beschrieben, der Länge der abgeteilten Portion entspricht und darüber hinaus der Wegstrecke, die sich die Transportbänder 5a, 5b in Richtung T bewegen, wenn sie über eine Zeitdauer t2 angetrieben werden. Zusätzlich zu der Wegstrecke I bewegt sich die abgeteilte Portion 10 weiter um eine Wegstrecke ΔI, die der Wegstrecke entspricht, die sich die Transportbänder 5a und 5b in Transportrichtung bewegen, wenn sie zusätzlich über eine Zeitdauer Δt angetrieben werden. Wie aus Figur 3b hervorgeht, befindet sich der Punkt P nach Ansteuerung der Transportbänder 5a, b in Transportrichtung in einem vom Abstand l+Δ| vom Punkt P entfernt.

Dadurch, dass nach Portionsende, d.h. nachdem die Fülleinheit 1 von der Steuerung 8 über einen Zeitraum t2 angesteuert wurde und eine entsprechende Menge (eine Portion) an Wurstbrät ausgestoßen wurde, die Portion durch die Transportbänder noch um die Wegstrecke ΔI weitertransportiert wird, wird zusätzliche auf dem Füllrohr geraffte Wursthülle von dem Füllrohr 2 abgezogen. Bei diesem Ausführungsbeispiel wird die Zeitdauer Δt bzw. die Wegstrecke ΔI so gewählt, dass die zusätzlich abgezogene Wursthülle ein Volumen bereitstellt, das vorzugsweise dem Halben vom Clipmodul verdrängten Volumen entspricht. Das von den Verdrängerelementen des Clipmoduls 4 verdrängte Volumen ist in Figur 3a schraffiert dargestellt. Dadurch dass nach dem Portionsende zusätzlich Wursthülle abgezogen wird, wird, wie aus Figur 3b ersichtlich, die Wursthülle etwas lockerer befüllt. Während des Verdrängens durch das Clipmodul 4 wird die Masse in dem Bereich der Wursthülle, der durch Nachziehen des Darms etwas lockerer befüllt ist, so verteilt, dass die nun fertige Portion wieder prall befüllt ist. Somit ergibt sich eine verbesserte Gewichtsgenauigkeit, eine gleiche Länge der Portionen sowie eine hohe Leistung aufgrund keiner zusätzlich axial bewegter Teile wie Darmbremse oder Verdränger. D.h., dass die Darmbremse und die Verdrängerelemente des Clipmoduls 4 in Axialrichtung unbeweglich fixiert angeordnet sind. Das Füllgut wird schonender behandelt und es ist ein größtmöglicher Füllrohrdurchmesser verwendbar, da keine Masse gepuffert werden muss. Der große Füllrohrdurchmesser bringt den Vorteil mit sich, dass es eine geringere Fließgeschwindigkeit gibt und eine geringere Faltenbildung in Längsrichtung der abgezogenen Wursthülle.

Die durch die Clips 9 unterteilte gefüllte Wursthülle kann durch die Trenneinheit 6 zu Einzelportionen oder zu Ketten von zwei oder mehreren Portionen geschnitten werden. Die Trenneinheit 6 durchtrennt dabei die unterteilte gefüllte Wursthülle in einem Bereich zwischen den Transportbändern zwischen einem durch das Clipmodul 4 angebrachten Doppelclip.

Die Trenneinheit 6 sowie die zuvor beschriebene Aufhängeeinheit 7 sind jedoch lediglich optional vorgesehen und keine wesentlichen Bestandteile der erfindungsgemäßen Vorrichtung. Das Clipmodul 4 kann ggf. weiter Schlaufen oder Fäden einlegen.

Als zu verarbeitende Produkte sind gerade Portionen, Einzelwürste, Wurstketten und halbe Ringe in füllfertige und nicht füllfertige Hüllen, Kunstdärme, Faserdärme, Collagendärme und Naturdärme oder auch koexxtrudierte Hüllen zu nennen.

Der in Figur 2 gezeigte Signalzeitplan ist nur beispielhaft. Wesentlich ist, dass nach Portionsende die Portion noch um eine Wegstrecke ΔI weitertransportiert wird um weitere Wursthülle von dem Füllrohr abzuziehen, um das beim Verdrängen verlorene Volumen bereitzustellen.

Als Transportmittel wurden bei dem gezeigten Ausführungsbeispiel umlaufende Transportbänder gezeigt. Es können jedoch auch in gleicher Weise, z.B. gegenüberliegende Transportketten, Rollen, Rollenpaare etc. als Transportmittel eingesetzt werden, solange deren Abstand zueinander, wie zuvor beschrieben, an ein bestimmtes Wurstkaliber angepasst werden kann, damit die gefüllte Wursthülle in Transportrichtung T gefördert werden kann und Wursthülle vom Füllrohr abgezogen werden kann. Die Transportmittel müssen darüber hinaus synchron zur Ausstoßgeschwindigkeit laufen können.

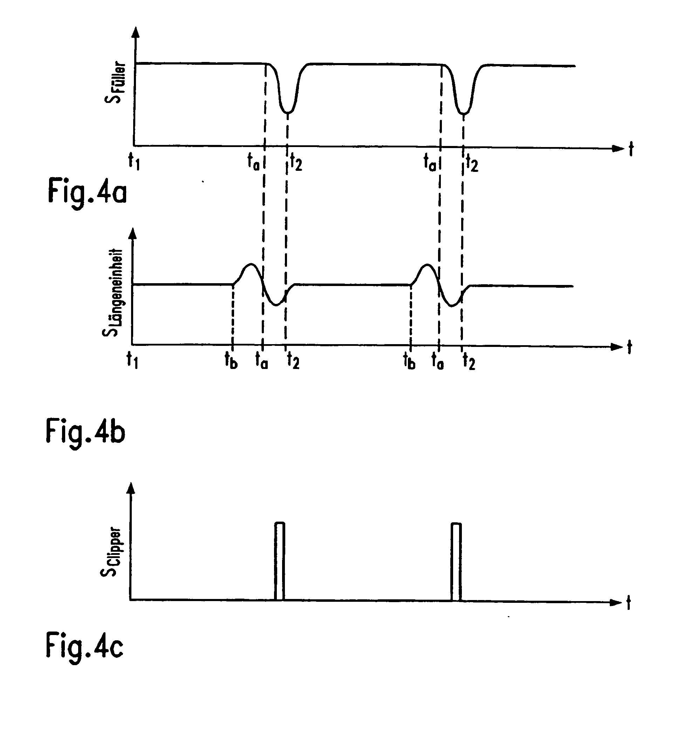

Im Zusammenhang mit Figuren 4a bis 4c ist ein weiteres Ausführungsbeispiel der vorliegenden Erfindung gezeigt. Dieses zweite Ausführungsbeispiel entspricht im Wesentlichen dem im Zusammenhang mit den Figuren 1 und 3 gezeigten Ausführungsbeispiel. Während bei dem im Zusammenhang mit Figur 2 gezeigten Ausführungsbeispiel die Fülleinheit 1 intermittierend betrieben wird, wird, wie aus Figur 4a ersichtlich ist, die Fülleinheit 1 hier kontinuierlich angesteuert, wobei zwischen zwei Einzelportionen der Füllgutausstoß abgesenkt ist. Wie auch bei der ersten Ausführungsform, wird das Steuersignal S_{Füller} an die Fülleinheit 1 geleitet, bis nach einer vorbestimmten Zeit t2 die Portionsmenge für eine Einzelportion, d.h. z.B. für eine Wurst, ausgestoßen wird und somit das Portionsende erreicht ist. Zu einem Zeitpunkt ta, der vor dem Zeitpunkt t2 liegt, wird, wie bereits erwähnt, die Füllgutausstoßmenge reduziert. Während des Füllens steuert, wie aus Figur 4b hervorgeht, die Steuerung 8 das Transportmittel, hier die Transportbänder 5a, b bzw. deren Antrieb, an. Hier erfolgt der Antrieb der Transportmittel kontinuierlich. Die Signalhöhe S1 entspricht der Transportgeschwindigkeit der Transportmittel während des Füllens. Kurz vor Portionsende, d.h. vor Ablauf der Zeitdauer t2, steigt das Steuersignal für die Transportmittel, d.h. hier die Transportbänder 5a, b, an, so dass die Transportmittel, hier die Transportbänder 5a, b, kurz beschleunigt werden, damit zusätzliche Hülle vom Füllrohr 2 abgezogen werden kann. Die Beschleunigung beginnt zu einem Zeitpunkt tb, wobei z.B. t2 > tb > 0,75 t2, was heißt, dass die Beschleunigung etwa im letzten Viertel eines Füllzyklus liegt. In Figur 4b wird die Beschleunigung noch vor dem Zeitpunkt ta durchgeführt, bei dem die Füllgutausstoßmenge reduziert wird. Die Beschleunigung bewirkt, dass zusätzliche, d. h. mehr Wursthülle pro Zeit vom Füllrohr 2 abgezogen wird im Vergleich zu der Menge an Wursthülle, die bei Transportgeschwindigkeit vor der Beschleunigung abgezogen wird. Unter der zusätzlich abgezogenen Wursthülle versteht man hier die Differenz der abgezogenen Wursthülle während der Beschleunigung und der Hülle, die während der Beschleunigungsdauer bei normaler Transportgeschwindigkeit vor der Beschleunigung abgezogen worden wäre.

Bei dieser Ausführungsform wird die Geschwindigkeit der Transportmittel 5a, b nach dem Zeitpunkt ta, bei dem die Füllgutausstoßmenge abgesenkt wird, ebenfalls ab und steigt dann wieder auf normale Transportgeschwindigkeit an, wobei das Signal wieder den Wert S1 annimmt. Die Steuerung 8 gibt darüber hinaus ein Signal S_{Clipper} an das Clipmodul 4, so dass die befüllte Wursthülle durch das Clipmodul 4 verschlossen wird. Wie aus den Figuren 4a, b, c hervorgeht, wiederholt sich nachfolgend der zuvor beschriebene Vorgang zur Herstellung von Einzelportionen, z.B. einer Wurstkette. Auch bei dem in Figur 4 gezeigten Ausführungsbeispiel wird, wie im Zusammenhang mit Figuren 3a und 3b deutlich ist, die Hülle noch um eine Wegstrecke ΔI durch den Beschleunigungsvorgang vor dem Clippen weitertransportiert, um zusätzliche Hülle vom Füllrohr abzuziehen, um das beim Verdrängen verlorene Volumen durch zusätzliche Hülle bereitzustellen.

Bei dieser Ausführungsform weist die Vorrichtung vorzugsweise noch eine nicht dargestellte Eingabeeinrichtung auf, um die Beschleunigunghöhe, die Beschleunigungsdauer und den Beschleunigungszeitpunkt tb einzugeben.

Bei den vorherigen Ausführungsbeispielen wurde das erfindungsgemäße Verfahren und die erfindungsgemäße Vorrichtung zur Wurstherstellung beschrieben. Selbstverständlich ist die vorliegende Erfindung nicht auf die Herstellung von Würsten beschränkt. Beispielsweise können auch andere Lebensmittel, wie beispielsweise Marzipan etc., in schlauchförmige Hüllen portioniert werden und beidseitig mit Clips verschlossen werden.

## Patentansprüche

1. Verfahren zum Herstellen von mit Füllgut befüllten Einzelportionen, wie z.B. von Würsten (10, 20) einer Länge I mit folgenden Schritten:
a) Ansteuern einer Fülleinheit (1) über eine erste Zeitdauer t2, wodurch eine Portion Füllgut durch ein Füllrohr (2) ausgestoßen wird, so dass eine Hülle mit einer Portion Füllgut befüllt wird, und entweder
b) gleichzeitiges Ansteuern von Transportmitteln (5a, b) über eine zweite Zeitdauer t2+ Δt, so dass die gefüllte Hülle in Transportrichtung abgeführt wird und nach Portionsende zusätzliche Hülle von den Transportmitteln (5a, b) über den Zeitraum Δt von dem Füllrohr (2) abgezogen wird oder
b') gleichzeitiges Ansteuern der Transportmittel (5a, b), so dass die gefüllte Hülle in Transportrichtung abgeführt wird, wobei kurz vor Portionsende, d.h. vor Ablauf der Zeitdauer t2 die Transportmittel (5a, b) beschleunigt werden, damit zusätzliche Hülle vom Füllrohr (2) abgezogen wird,
c) nach Schritt b) oder b') Verschließen der gefüllten Hüllen durch ein Clipmodul (4).

2. Verfahren nach Anspruch 1,
**dadurch gekennzeichnet, dass**
im Fall b) die Fülleinheit intermittierend betrieben wird und im Fall b') die Fülleinheit intermittierend oder kontinuierlich mit abgesenktem Füllgutausstoß zwischen zwei Portionen betrieben wird.

3. Verfahren nach Anspruch 1,
**dadurch gekennzeichnet, dass**
die Zeitdauer (Δt) oder die Beschleunigung so gewähltwerden, dass die zusätzlich abgezogene Hülle ein Volumen bereitstellt, das dem 0,5- bis 2fachen vom Clipmodul (4) verdrängten Volumen und vorzugsweise etwa dem Halben vom Clipmodul (4) verdrängten Volumen entspricht.

4. Verfahren nach einem der Ansprüche 1 oder 2,
**dadurch gekennzeichnet, dass**
die Transportmittel (5a, b) im Fall b) synchron zur Ausstoßgeschwindigkeit der Fülleinheit laufen.

5. Verfahren nach mindestens einem der Ansprüche 1 bis 4,
**dadurch gekennzeichnet, dass**
die durch Clips (9) verschlossene gefüllte Hülle in den Transportmitteln (5a, b) durch eine Trenneinheit (6) zu Einzelportionen oder zu Ketten von mehr als zwei Portionen geschnitten wird.

6. Verfahren nach einem der Ansprüche 1 - 3,
**dadurch gekennzeichnet, dass**
zwischen zwei aufeinanderfolgenden Clipschritten die Transportmittel 5. a, b die gefüllte Hülle um eine Wegstrecke l+ΔI fördern, die größer ist als die Länge I der Einzelportion.

7. Vorrichtung zum Durchführen des Verfahrens nach mindestens einem der Ansprüche 1 bis 6, mit einer Fülleinheit (1), einem Füllrohr (2), einem Clipmodul (4) zum Verschließen der gefüllten Hüllen, Transportmitteln (5a, b) zum kontrollierten Abführen der gefüllten Hüllen, **gekennzeichnet durch**
eine Steuereinheit (8), die die Fülleinheit (1) über eine erste Zeitdauer (t2) ansteuert, wodurch eine Portion Füllgut über das Füllrohr (2) ausgestoßen wird, und die gleichzeitig entweder
die Transportmittel (5a, b) über eine zweite Zeitdauer t2+ Δt ansteuert, so dass die portionsweise gefüllten Hüllen in Transportrichtung abgeführt werden und nach Portionsende zusätzlich Hülle vom Füllrohr (2) über den Zeitraum Δt abgezogen wird, und die, nachdem die Transportmittel (5a, b) über die Zeitdauer t2+ Δt angesteuert wurden, das Clipmodul (8) zum Verschließen der gefüllten Hülle ansteuern
oder
die Transportmittel (5a, b) derart ansteuert, dass die gefüllte Hülle in Transportrichtung abgeführt wird, wobei kurz vor Portionsende, d.h. vor Ablauf der Zeitdauer t2 die Transportbänder (5a, b) kurz beschleunigt werden, damit zusätzliche Hülle vom Füllrohr abgezogen wird, und die das Clipmodul ansteuert, dass es die gefüllte Hülle bei Portionsende verschließt .

8. Vorrichtung nach Anspruch 7,
**dadurch gekennzeichnet, dass**
die Vorrichtung eine Eingabeeinrichtung umfasst zur Eingabe der Zeitdauer (Δt), oder zur Eingabe der Beschleunigungshöhe, der Beschleunigungsdauer und des Beschleunigungszeitpunktes.

9. Vorrichtung nach mindestens einem der Ansprüche 7 bis 8,
**dadurch gekennzeichnet, dass**
die Transportmittel Transportbänder (5a, b) sind.

10. Vorrichtung nach Anspruch 9,
**dadurch gekennzeichnet, dass**
im Bereich der Transportbänder (5a, b) eine Trenneinheit (6) vorgesehen ist.

11. Vorrichtung nach mindestens einem der Ansprüche 7 bis 10,
**dadurch gekennzeichnet, dass**
die Vorrichtung weiter eine Darmbremse (3) aufweist und das Clipmodul weiter Verdränger aufweist, wobei die Darmbremse und die Verdränger des Clipmoduls in Axialrichtung unbeweglich fixiert sind.

## Claims

1. Method for making individual portions filled with filling, e.g. sausages (10, 20) of length 1, with the following steps:
a) driving a filling unit (1) for a first length of time t2, as a result of which a portion of filling is expelled through a filling tube (2), so that a casing is filled with a portion of filling, and either
b) simultaneously driving transport means (5a, b) for a second length of time t2+Δt so that the filled casing is carried away in the direction of transport and after the end of a portion additional casing is pulled off the filling tube (2) by the transport means (5a, b) over the period Δt or
b') simultaneously driving the transport means (5a, b) so that the filled casing is carried away in the direction of transport, the transport means (5a, b) being accelerated just before the end of a portion, i.e. before expiry of length of time t2, so that additional casing is pulled off the filling tube (2),
c) after step b) or b') closing the filled casings by a clip module (4).

2. Method according to claim 1,
**characterised in that**
in case b) the filling unit is operated intermittently and in case b') the filling unit is operated intermittently or continuously with reduced expulsion of filling between two portions.

3. Method according to claim 1,
**characterised in that**
the length of time (Δt) or the acceleration are selected such that the casing which is additionally pulled off provides a volume which corresponds to 0.5 to 2 times the volume displaced by the clip module (4) and preferably approximately half the volume displaced by the clip module (4).

4. Method according to either of claims 1 or 2,
**characterised in that**
the transport means (5a, b) in case b) run synchronously with the speed of expulsion of the filling unit.

5. Method according to any of claims 1 to 4,
**characterised in that**
the filled casing closed by clips (9) in the transport means (5a, b) is cut by a separating unit (6) into individual portions or into strings of more than two portions.

6. Method according to any of claims 1 - 3,
**characterised in that**
between two successive clip steps the transport means 5, a, b convey the filled casing by a distance of 1 + Δl which is greater than the length l of the individual portion.

7. Apparatus for carrying out the method according to one or more of claims 1 to 6, with a filling unit (1), a filling tube (2), a clip module (4) for closing the filled casings, transport means (5a, b) for carrying away the filled casings in a controlled manner,
**characterised by**
a control unit (8) which drives the filling unit (1) for a first length of time (t2), as a result of which a portion of filling is expelled through the filling tube (2), and which simultaneously either
drives the transport means (5a, b) for a second length of time t2+Δt so that the casings filled in portions are carried away in the direction of transport and after the end of a portion additionally casing is pulled off the filling tube (2) over the period Δt, and which, after the transport means (5a, b) have been driven for the length of time t2+Δt, drive the clip module (8) to close the filled casing
or
drives the transport means (5a, b) in such a way that the filled casing is carried away in the direction of transport, the conveyor belts (5a, b) being briefly accelerated just before the end of a portion, i.e. before expiry of length of time t2, so that additional casing is pulled off the filling tube, and which drives the clip module so that it closes the filled casing at the end of the portion.

8. Apparatus according to claim 7,
**characterised in that**
the apparatus includes an input device for entering the length of time (Δt), or for entering the acceleration level, the period of acceleration and the moment of acceleration.

9. Apparatus according to either of claims 7 to 8,
**characterised in that**
the transport means are conveyor belts (5a, b).

10. Apparatus according to claim 9,
**characterised in that**
in the region of the conveyor belts (5a, b) is provided a separating unit (6).

11. Apparatus according to one or more of claims 7 to 10,
**characterised in that**
the apparatus further comprises a casing brake (3) and the clip module further comprises displacers, the casing brake and the displacers of the clip module being fixed immovably in the axial direction.

## Revendications

1. Procédé de fabrication de portions individuelles remplies d'une garniture, telles que par exemple de saucisses (10, 20) d'une longueur 1, comprenant les étapes suivantes :
a) commande d'une unité de remplissage (1) sur une première période t2, une portion de garniture étant de ce fait éjectée au travers d'un tube de remplissage (2), de sorte qu'un boyau est rempli d'une portion de garniture, et soit
b) commande simultanée de moyens de transport (5a, b) sur une seconde période t2 + Δt, de sorte que le boyau rempli est évacué dans la direction de transport et, à la fin d'une portion, du boyau supplémentaire est tiré par les moyens de transport (5a, b) sur la période Δt du tube de remplissage (2) ou
b') commande simultanée des moyens de transport (5a, b), de sorte que le boyau rempli est évacué dans la direction de transport, les moyens de transport (5a, b) étant alors accélérés juste avant la fin de la portion, c'est-à-dire avant l'écoulement de la période t2, afin que du boyau supplémentaire soit tiré du tube de remplissage (2),
c) fermeture des boyaux remplis par un module de séparation par clips (4) après l'étape b) ou l'étape b').

2. Procédé suivant la revendication 1, **caractérisé en ce que**, dans le cas b), l'unité de remplissage est exploitée en intermittence et, dans le cas b'), l'unité de remplissage est exploitée en intermittence ou en continu avec une éjection de garniture réduite entre deux portions.

3. Procédé suivant la revendication 1, **caractérisé en que** la période (Δt) ou l'accélération sont choisies de sorte que le boyau tiré en supplément fournit un volume correspondant à 0,5 - 2 fois le volume refoulé par le module de séparation par clips (4) et de préférence à à peu près la moitié du volume refoulé par le module (4).

4. Procédé suivant l'une des revendications 1 et 2, **caractérisé en ce que** les moyens de transport (5a, b), dans le cas b), tournent en synchronisme avec la vitesse d'éjection de l'unité de remplissage.

5. Procédé suivant l'une au moins des revendications 1 à 4, **caractérisé en ce que** le boyau rempli, fermé par clips (9), est découpé dans les moyens de transport (5a, b) par une unité de coupe (6) en portions individuelles ou en chapelets de plus de deux portions.

6. Procédé suivant l'une des revendications 1 à 3, **caractérisé en ce que**, entre deux étapes de séparation par clips successives, les moyens de transport 5a, b acheminent le boyau rempli d'une trajectoire 1 + Δl, qui est supérieure à la longueur 1 de la portion individuelle.

7. Dispositif pour la mise en oeuvre du procédé suivant l'une au moins des revendications 1 à 6, comprenant une unité de remplissage (1), un tube de remplissage (2), un module de séparation par clips (4) pour la fermeture des boyaux remplis, des moyens de transport (5a, b) pour l'évacuation contrôlée des boyaux remplis, **caractérisé par**
une unité de commande (8), qui commande l'unité de remplissage (1) sur une première période (t2), une portion de garniture étant de ce fait éjectée par l'intermédiaire du tube de remplissage (2), et qui simultanément soit
commande les moyens de transport (5a, b) sur une seconde période t2 + Δt, de sorte que les boyaux remplis par portions sont évacués dans la direction de transport et que du boyau supplémentaire, à la fin de la portion, est tiré du tube de remplissage (2) sur la période Δt, et qui, après que les moyens de transport (5a, b) ont été commandés sur la période t2 + Δt, commande le module de séparation par clips (8) pour la fermeture du boyau rempli,
ou
commande les moyens de transport (5a, b) de telle sorte que le boyau rempli est évacué dans la direction de transport, les bandes transporteuses (5a, b) étant brièvement accélérées juste avant la fin de la portion, c'est-à-dire avant l'écoulement de la période t2, afin que du boyau supplémentaire soit tiré du tube de remplissage, et commande le module de séparation par clips de sorte qu'il ferme le boyau rempli à la fin de la portion.

8. Dispositif suivant la revendication 7, **caractérisé en ce que** le dispositif comporte un dispositif d'introduction pour introduire la période (Δt), ou le niveau d'accélération, la durée d'accélération et l'instant de l'accélération.

9. Dispositif suivant l'une au moins des revendications 7 à 8, **caractérisé en ce que** les moyens de transport sont des bandes transporteuses (5a, b).

10. Dispositif suivant la revendication 9, **caractérisé en ce qu'**une unité de coupe (6) est prévue dans la zone des bandes transporteuses (5a, b).

11. Dispositif suivant l'une au moins des revendications 7 à 10, **caractérisé en ce que le** dispositif comporte en outre un frein pour boyaux (3) et le module de séparation par clips des dispositifs de refoulement, et les dispositifs de refoulement du module de séparation par clips sont fixés de façon immobile dans la direction axiale.
